# EUROPEAN PATENT APPLICATION

(11) **EP 1 816 359 A2**
(43) Date of publication of application: **08.08.2007**
(21) Application number: 06026070.0
(22) Date of filing: 15.12.2006
(51) Int. Cl.: F16C 11/06

(54) **Method of manufacturing a spherical bearing arrangement**

(30) Priority: 03.02.2006 GB 0602253
(71) Applicant: Minebea Co. Ltd., Kitasaku-gun, Nagano 389-0293 (JP)
(72) Inventor: Smith, Paul, Lincoln LN6 3RA (GB); Peet, Stephen, Lincoln LN6 3RA (GB); Clarke, Allen, Lincoln LN6 3RA (GB)
(74) Representative: Hoarton, Lloyd Douglas Charles

(57) **Abstract**

A method of manufacturing a spherical bearing arrangement (1), comprising:
providing a ball (3) and a cast bearing housing (12);
elevating the ductility of the cast bearing housing; and
swaging the housing onto the ball whilst the ductility is elevated, the ductility lowering after swaging.

## Description

### Description of Invention

The present invention relates to a spherical bearing arrangement and a method of manufacture thereof.

A spherical bearing arrangement comprises a spherical ball mounted in a housing. The ball is mounted in the housing such that it can rotate freely in all directions but without allowing any (or at least very minimal) translational movement relative to the housing. The ball is sometimes mounted in the housing such that there is a predetermined torque or clearance between the ball and housing. Such spherical bearing arrangements are well known and find application in the aerospace and automotive industries.

The preferred method of mounting the ball in the housing is to swage (i.e. deform) at least a portion of the housing onto and around the ball to entrap it therein - thereby preventing relative translational movement. After swaging, the outer surface of the ball and the inner surface of the housing conform closely to one another so as to form a bearing interface - thereby affording relative rotational movement. To ensure close conformity of the two surfaces post-swaging (i.e. after swaging), a machining step is sometimes carried out on the inner surface of the housing pre-swaging (i.e. before swaging).

In order for the housing to be effectively swaged onto the ball, the material from which the housing is made must be sufficiently ductile to withstand the deformation caused by the swaging process. It is widely accepted, therefore, that housings having a high ductility are the most suitable for the swaging process. By high ductility is meant that ductility is in the order of 10% and greater.

Prior art bearing housings are manufactured from a stock 'billet' of metal. A billet of metal simply comprises a large block of a cast metal (or a mixture of metals, according to the customer's requirement). The billets are delivered to the bearing housing manufacturer and are then machined (e.g. cut, milled, drilled etc) to create the bearing housing to swage onto the ball. It will be appreciated that a large volume of material is removed in this process (sometimes >80%).

However, due to the nature of the casting process, the cast billets tend to have a large grain size which contributes to their having a low ductility. By low ductility is meant that ductility is in the region of less than 10%. Furthermore, the grain structure of cast materials is not uniform, which acts further to reduce the ductility thereof.

When a swaging operation is performed on cast articles having such low ductility, the articles tend to crack and fail; at the very least, the swaging is not performed to a satisfactory, repeatable, level. In the case where the article is a housing for a spherical bearing arrangement, it is a strict requirement that certain characteristics of the resultant bearing arrangement (e.g. torque, clearance etc.) are maintained within a narrow, predetermined range. Any manufactured bearing arrangements having characteristics falling outside of these ranges need to be re-worked or even scrapped, at high financial cost.

Accordingly, to avoid cracking or otherwise mechanical failure of the bearing housing during the swaging process - which can result in the characteristics of the bearing falling outside of the predetermined range(s) - it is accepted that the cast billet must first be mechanically worked in order to increase its ductility to a suitable level where swaging can be performed with satisfactory, repeatable, results.

Such mechanical working of the billet material involves at least one process of, for example, forging, extruding and rolling. Following such processes having been carried out, the resultant worked material has a small equiaxed grain structure, which acts to increase the ductility of material to a level that is sufficient to allow for swaging to be effectively carried out, without the risk of cracking or mechanical failure occuring.

Furthermore, to ensure a suitable level of ductility of the worked material is achieved, only billet metals and materials having a relatively high initial ductility are considered. Examples of such metals are steel and copper/bronze. Indeed, even if materials having a low initial ductility are mechanically worked in an attempt to increase the ductility thereof, these operations still do not result in a material having a ductility suitable for swaging. Materials having a low initial ductility, therefore, are simply not considered as being suitable for mechanically working to elevate ductility or for swaging operations per se.

It will be appreciated that the separate "mechanical working" operations of forging, extruding, rolling and/or machining etc add many additional steps to the manufacturing process over that of the initial casting and the later machining to form the bearing housing ready for swaging. In addition, materials having a high ductility such as steel and copper/bronze are expensive in comparison to other materials having a relatively lower ductility. However, such methods and materials have hitherto been accepted as necessary in order to manufacture a housing having the desired ductility to enable the housing to be effectively swaged around and onto the ball without the risk of cracking or mechanical failure.

It is an object of the present invention to seek to overcome at least some of the aforementioned problems.

Accordingly, one aspect of the present invention provides a method of manufacturing a spherical bearing arrangement, the method comprising:
providing a ball and a cast bearing housing;
elevating the ductility of the cast bearing housing; and
swaging the housing onto the ball whilst the ductility is elevated, the
ductility lowering after swaging.

Preferably, the method further comprises: performing at least one machining operation on the cast housing prior to swaging thereof.

Advantageously, the method further comprises: performing at least one machining operation on the resultant spherical bearing arrangement.

Conveniently, the elevation of the ductility is performed by heating the housing.

Preferably, the ductility is lowered after swaging by cooling the housing.

Advantageously, the ductility of the housing prior to elevation is less than 10%.

Conveniently, the ductility of the housing prior to elevation is less than or equal to substantially 9%.

Preferably, the ductility of the housing prior to elevation is less than or equal to substantially 8%.

More advantageously, the ductility of the housing prior to elevation is less than or equal to substantially 7%.

Conveniently, the elevated ductility is at least 10%.

Preferably, the elevated ductility is at least substantially 11 %.

Advantageously, the elevated ductility is at least substantially 12%.

Conveniently, the elevation of the ductility is performed by providing the housing at a predetermined temperature.

Preferably, the predetermined temperature is at least substantially 80°C.

Advantageously, the predetermined temperature is at least substantially 90°C.

Conveniently, the predetermined temperature is at least substantially 100°C.

More preferably, the predetermined temperature is at least substantially 110°C.

More advantageously, the predetermined temperature is at least substantially 120°C.

Conveniently, the lowered ductility of the housing is at least substantially equal to the ductility of the housing before elevation.

Preferably, the lowered ductility of the housing is substantially greater than the ductility of the housing before the elevation.

Advantageously, the material of the bearing housing comprises metal.

Conveniently, the metal is zinc or zinc alloy.

Another aspect of the present invention provides a spherical bearing arrangement, comprising a cast bearing housing swaged onto a ball, wherein the ductility of the housing is elevated during swaging and lowered after swaging.

Yet another aspect of the present invention provides a rod end bearing comprising the spherical bearing arrangement of the present invention.

In any event, the present invention provides a method of manufacturing a spherical bearing arrangement or a spherical bearing arrangement as defined in the claims.

The present invention will now be described, by way of example only, with reference to the accompanying figures, in which:
FIGURE 1 is a perspective view of a spherical bearing arrangement manufactured in accordance with a method embodying the present invention; and
FIGURE 2 is a cross-sectional view of the spherical bearing arrangement of Figure 1 along line A-A;
FIGURE 3 is a cross-sectional view of a bearing housing prior to swaging used in a method embodying the present invention;
FIGURE 4 is a cross-sectional view of another bearing housing prior to swaging used in a method embodying the present invention;
FIGURE 5 is a perspective view of another bearing housing prior to swaging used in a method embodying the present invention; and
FIGURE 6 is a cross-sectional view of the bearing housing of Figure 5.

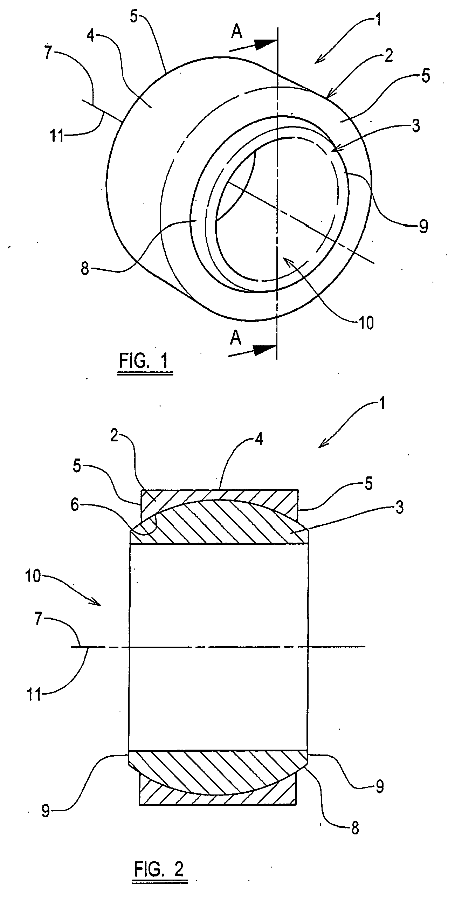

Figures 1 and 2 show a spherical bearing arrangement 1, comprising: a bearing housing 2; and a ball 3 mounted therein. The bearing housing 2 is substantially annular and comprises a cylindrical outer surface 4 with two axial end faces 5 and an inner surface 6 comprising a spherical housing bearing surface. The bearing housing 2 further has a central axis 7. The ball 3 is substantially spherical in shape, with a spherical bearing surface 8 conforming to the housing bearing surface 6 such that the bearing surfaces 6,8 are in sliding contact with one another so as to form a bearing interface. In this example, the ball 3 has an axial end face 9 at either end of a bore 10 passing through the ball 3. The bore 10 has a central axis 11 passing therethrough and, in use, a shaft is often inserted in the bore 10 (not shown).

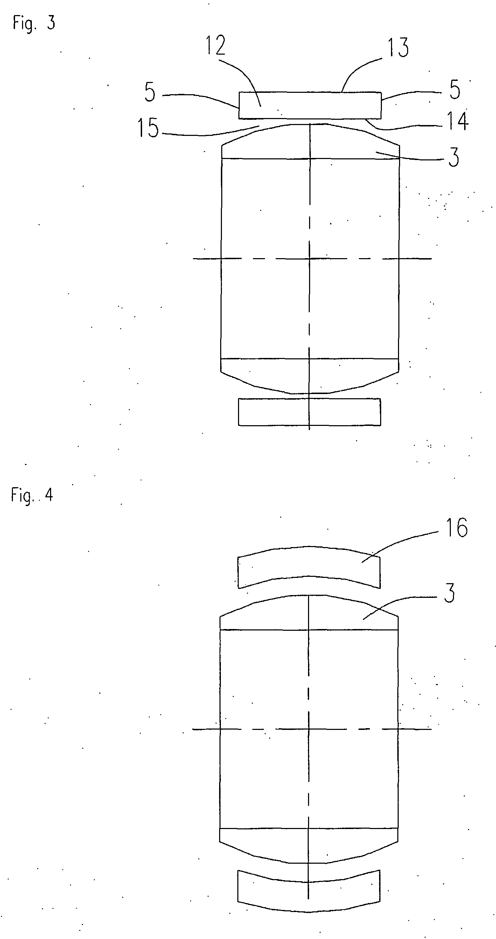

Figure 3 shows a housing 12 prior to being swaged onto the ball 3, where like reference numerals are used to denote like features. The housing 12 comprises a substantially cylindrical outer surface 13, a substantially cylindrical inner surface 14 and two axial end faces 5. The substantially cylindrical inner surface 14 defines a bore 15 of the housing 12. Preferably, the diameter of the bore 15 is greater than the diameter of the ball 3. Accordingly, the ball can be inserted into the bore 15 of the housing 12. Alternatively, the diameter of the bore 14 may be equal to or very slightly less than the diameter of the ball 3 so as to provide a slight interference fit.

In a method of manufacturing a spherical bearing arrangement embodying the present invention, the housing 12 is provided with a ball 3 inserted therein. At least a portion of the housing 12 is then swaged around and onto the ball 3 so as to entrap the ball 3 in the housing 12. The resultant spherical bearing arrangement 1 is shown in figures 1 and 2. After swaging, the inner surface 6 of the bearing housing 2 is in sliding relationship with the outer surface 8 of the ball 3, so as to form a bearing interface. Following swaging, the ball 3 is able to rotate in all directions with respect to the housing 2 but relative translational movement is substantially prevented.

It will be appreciated that immediately following the swaging of the housing 12 of figure 3 onto the ball 3, the outer surface 13 thereof will be substantially convex. It will be noted, however, that the outer surface 4 of the resultant bearing housing 2 shown in Figure 2 is cylindrical. This is because there is preferably a machining operation performed on the outer surface 13 of the housing 12 after swaging, so that the outer surface 4 of the housing 2 is cylindrical - which aids insertion of the resultant bearing into a rod end for example.

In a method embodying the present invention, a cast bearing housing is provided. By cast bearing housing is meant a cast item in the shape of a bearing housing. Conveniently, the cast housing substantially takes the form of the housing 12 shown in Figure 3. To cast the housing, molten metal is poured into two mated mould portions, each mould portion defining a female profile of one half of the bearing housing. Many other types of moulds and methods of casting are well known in the art and are accordingly encompassed by the invention. Other examples are: lost wax, sand casting, hot chamber die casting, cold chamber casting and spin casting.

Preferably, following the casting of the bearing housing 12, only minimal machining operations need be carried out on the housing 12 before it is ready for swaging, for example fettling or de-burring of surfaces of the housing. Additionally, it will be appreciated that any risers attached to the cast housing 12 must be removed and the surrounding surface smoothed. Conveniently, any such machining operations are purely cosmetic and are not performed so as to drastically alter the general shape of the cast housing 12. As a result, a bearing housing 12 cast in a method embodying the present invention substantially resembles that shown in Figure 3.

Due to the nature of the casting process, the ductility of the cast housing 12 is low, due at least in part to the large grain size and non-uniform grain structure thereof. By low ductility is meant a ductility of less than 10%. As a result, the cast housing 12 is not sufficiently ductile for it to be swaged immediately onto the ball 3 to form a spherical bearing arrangement 1. A method embodying the present invention provides for the elevation of the ductility of the cast bearing housing 12 whilst the housing 12 is being swaged onto the ball 3.

Conveniently, a method of manufacturing a spherical bearing arrangement embodying the present invention comprises: providing a ball and a cast bearing housing, the bearing housing having a first ductility; elevating the ductility of the cast bearing housing to a second ductility; and swaging the housing onto the ball whilst the ductility is elevated (i.e. at the second ductility), the ductility lowering to a third ductility after swaging. Preferably, the third ductility is equal to the first ductility. Alternatively, the third ductility may be higher or lower than the first ductility.

Preferably, the ductility of the housing 12 prior to elevation is less than 10%. Conveniently, the ductility of the housing 12 prior to elevation is less than or equal to substantially 9%. Advantageously, the ductility of the housing prior to elevation is less than or equal to substantially 8%. Most preferably, the ductility of the housing prior to elevation is less than or equal to substantially 7%.

In a method embodying the present invention, the bearing housing 12 is preferably heated, which acts to elevate the ductility of the housing 12. Preferably, the elevated ductility is at least 10%. Conveniently, it is at least substantially 11%, Advantageously, it is at least substantially 12%. Most preferably, the elevated ductility is such that it permits the housing 12 to be swaged onto the ball 3 without the risk (or at least significantly reducing the risk) of the housing 12 cracking or otherwise mechanically failing. Methods embodying the present invention allow swaging of cast bearing housings 12 to be performed with satisfactory, repeatable, results. As a further consequence, the number of spherical bearing arrangements being scrapped for having characteristics outside of the very narrow tolerances is significantly reduced, saving costs.

Such an elevation in the ductility is brought about, in one embodiment, by the heating of the housing 12 altering the grain structure of the housing 12. Conveniently, the housing 12 is not heated to a level where the material of the housing 12 exhibits superplastic behaviour. Accordingly, when the housing 12 is cooled after the elevation, the structure of the material substantially returns to the structure prior to elevation. Preferably, when the housing 2 is cooled, the ductility is substantially equal to that before elevation occurred. Alternatively, the ductility of the housing 2 after cooling may be slightly higher or lower than the ductility of the housing 12 prior to elevation. In any event, methods embodying the present invention ensure that the ductility is elevated from its initial level throughout the swaging process.

With spherical bearing arrangements according to the prior art, the material from which the bearing housing is machined is mechanically worked so to increase the ductility thereof to a level sufficient to allow swaging. As a result of such mechanical working, the raised ductility of the material is often permanent. At the very least, only a minimal decrease in ductility is experienced immediately following the mechanical working processes having been completed. The increased ductility of such prior art housings is substantially stable and is maintained when the housing is substantially at room temperature.

Thus, with bearing housings according to the prior art, the ductility of the housing after swaging will be at a level sufficient for further swaging to be effectively and reliably performed, for example a ductility in excess of 10%.

The housing of a spherical bearing arrangement manufactured according to the present invention, on the other hand, preferably has a level of ductility after swaging which is lower than that required to effectively and reliably perform further swaging. As a result, spherical bearing arrangements manufactured according to a method embodying the present invention benefit from higher yield strength, higher fatigue strength and higher compressive yield strength, as well as greater hardness, when compared to a spherical bearing arrangement manufactured in accordance with a method not embodying the present invention. The bearing will therefore be able to more readily resist deformation in use due to the arrangement being subject to extreme axial forces and the like.

Preferably, the elevation of ductility in methods embodying the present invention is only temporary. By temporary is meant that the duration of the elevated ductility is such that it is sufficient for the purposes of the swaging operation to be performed. This temporary elevation also ensures that no long lasting changes are encountered in the grain structure or size of the material of the housing. Preferably, the housing is actively cooled after elevation by, for example, a coolant or refrigerant system. In another embodiment, the housing may be passively cooled by exposure simply to the ambient temperature.

Preferably, the material of the housing is zinc or zinc alloy. Such a metal is especially convenient in that it is cheap, in relation to, for example, steel and copper/bronze, and it is suitable for casting. Zinc or zinc alloy is traditionally not suitable for swaging. By practising the method of the invention on a casting material which is otherwise unsuitable for swaging, the casting material can then be swaged.

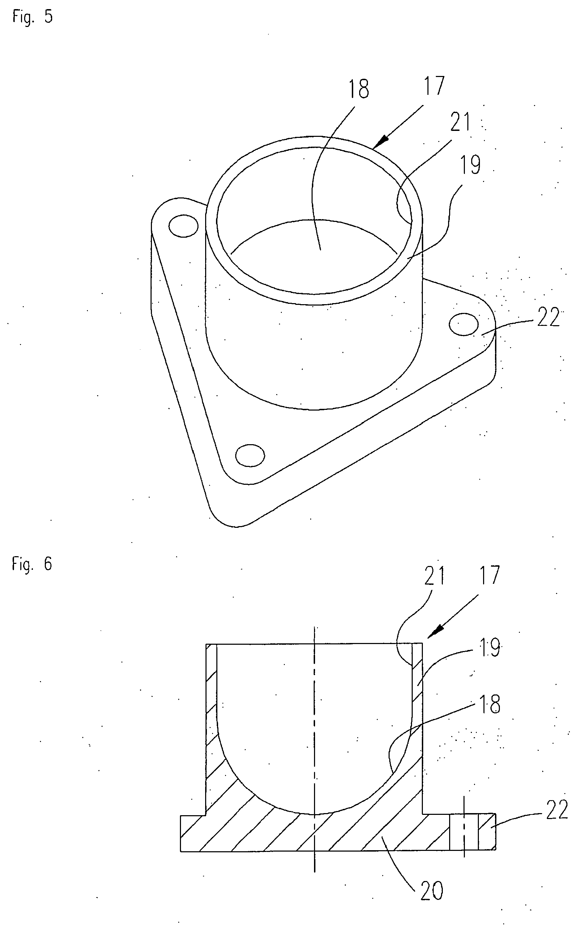

Figure 4 shows another form of cast bearing housing manufactured according to a method embodying the present invention. In this figure, the housing 16 has a substantially convex outer surface and a substantially concave inner surface. Such a shape of bearing housing is convenient during the swaging process in ensuring that the respective bearing surfaces of the ball and housing conform closely and uniformly with one another, to avoid pinching and the like. Of course, the bearing housing of a spherical bearing arrangement manufactured according to a method embodying the present invention may take any form and the exemplary arrangements shown in figures 3 and 4 are not to be seen as limiting.
The embodiments shown in figures 1 to 4 relate to a spherical bearing arrangement wherein both axial ends 5 of the housing 2, 12, 16 are swaged onto the ball 3. Another embodiment of a housing 17 on which the method of the present invention can be practised is shown in Figures 5 and 6. The bearing housing 17 comprises an inner spherical bearing surface 18 (loosely resembling a cup) for receiving the ball 3. Most preferably, the inner spherical bearing surface 18 substantially conforms to the spherical outer surface 8 of the ball 3 to be inserted therein. The housing 17 further comprises an annular wall 19 upstanding and extending perpendicularly away from the base 20 thereof. The inner surface 21 of the annular wall 19 is substantially cylindrical. The housing 17 is a cast part and preferably at least one machining operation is performed after casting to ensure that the inner spherical surface 18 conforms closely to the spherical surface 8 of the ball 3 to be inserted therein. The base 20 of the housing 17 preferably includes a flange 22 for fixing the housing 17 to another object.

When the housing 17 of figures 5 and 6 is used in a method embodying the present invention, only the annular wall 19 need by swaged over the ball 3. In any event, practising a method embodying the present invention on the housing 17 conveniently allows for the housing to be more readily swaged onto a ball 3 without cracking or mechanical failure. It will be appreciated that regardless of whether the housing of a spherical bearing arrangement made according to a method embodying the present invention comprises the housing 2, 12, 16, 17 of any of Figures 1 to 6, the benefits of the present invention will still be realised. The form of the bearing housings shown in Figures 1 to 6 are not to be seen as limiting.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of manufacturing a spherical bearing arrangement (1), the method comprising:
providing a ball (3) and a cast bearing housing (2);
elevating the ductility of the cast bearing housing (2); and
swaging the housing (2) onto the ball (3) whilst the ductility is elevated, the ductility lowering after swaging.

2. A method according to Claim 1, further comprising: performing at least one machining operation on the cast housing (2) prior to swaging thereof.

3. A method according to any preceding claim, further comprising:
performing at least one machining operation on the resultant spherical bearing arrangement (1).

4. A method according to any preceding claim, wherein the elevation of the ductility is performed by heating the housing (2).

5. A method according to any preceding claim, wherein the ductility is lowered after swaging by cooling the housing (2).

6. A method according to any preceding claim, wherein the ductility of the housing (2) prior to elevation is less than 10%.

7. A method according to any preceding claim, wherein the ductility of the housing (2) prior to elevation is less than or equal to substantially 9%.

8. A method according to any preceding claim, wherein the ductility of the housing (2) prior to elevation is less than or equal to substantially 8%.

9. A method according to any preceding claim, wherein the ductility of the housing (2) prior to elevation is less than or equal to substantially 7%.

10. A method according to any preceding claim, wherein the elevated ductility is at least 10%.

11. A method according to any preceding claim, wherein the elevated ductility is at least substantially 11 %.

12. A method according to any preceding claim, wherein the elevated ductility is at least substantially 12%.

13. A method according to any preceding claim, wherein the elevation of the ductility is performed by providing the housing (2) at a predetermined temperature.

14. A method according Claim 13, wherein the predetermined temperature is at least substantially 80°C.

15. A method according Claim 13, wherein the predetermined temperature is at least substantially 90°C.

16. A method according Claim 13, wherein the predetermined temperature is at least substantially 100°C.

17. A method according Claim 13, wherein the predetermined temperature is at least substantially 110°C.

18. A method according Claim 13, wherein the predetermined temperature is at least substantially 120°C.

19. A method according to any preceding claim, wherein the lowered ductility of the housing (2) is at least substantially equal to the ductility of the housing (2) before elevation.

20. A method according to Claim 19, wherein the lowered ductility of the housing (2) is substantially greater than the ductility of the housing (2) before the elevation.

21. A method according to any preceding claim, wherein the material of the bearing housing (2) comprises metal.

22. A method according to Claim 21, wherein the metal is zinc or zinc alloy.

23. A spherical bearing arrangement manufactured according to the method of any of claims 1 to 22.

24. A spherical bearing arrangement (1), comprising a cast bearing housing (2) swaged onto a ball (3), wherein the ductility of the housing (2) is elevated during swaging and lowered after swaging.

25. A rod end bearing comprising the spherical bearing arrangement of any of Claims 23 and 24.
